# EUROPÄISCHE PATENTSCHRIFT

(11) **EP 2 050 978 B1**
(45) Veröffentlichungstag und Bekanntmachung des Hinweises auf die Patenterteilung: **02.05.2018**
(21) Anmeldenummer: 08017608.4
(22) Anmeldetag: 08.10.2008
(51) Int. Cl.: F16D 65/097

(54) **Scheibenbremse für ein Nutzfahrzeug sowie Bremsbelag für eine Scheibenbremse**
Disc brake for a commercial vehicle and brake cover for a disk brake
Frein à disque pour un véhicule utilitaire et garniture de frein pour un frein à disque

(30) Priorität: 18.10.2007 DE 102007049980
(43) Veröffentlichungstag der Anmeldung: 22.04.2009
(73) Patentinhaber: KNORR-BREMSE Systeme für Nutzfahrzeuge GmbH, 80809 München (DE)
(72) Erfinder: Macke, Wlodzimierz, 82140 Olching (DE); Raffin, Christian, 85630 Grasbrunn (DE); Lehner, Thomas, 81677 München (DE); Gruber, Markus, 85560 Ebersberg (DE)
(74) Vertreter: Mattusch, Gundula

(56) Entgegenhaltungen:
- DE-A1- 2 603 549
- DE-A1- 3 839 957
- DE-A1- 4 303 961
- FR-A1- 2 876 427
- JP-A- 8 166 031
- JP-U- H0 428 236

## Beschreibung

Die Erfindung betrifft eine Scheibenbremse für ein Nutzfahrzeug gemäß dem Oberbegriff des Anspruchs 1 sowie einen Bremsbelag für eine Scheibenbremse.

Eine derartige Scheibenbremse ist aus der DE 40 20 487 A1 bekannt. Darin ist gezeigt und beschrieben, dass zur Positionssicherung der beiden Bremsbeläge diese jeweils mit einer Belaghaltefeder versehen sind, die im oberen, einer Montageöffnung des Bremssattels zugewandten Randbereich derart am Bremsbelag befestigt ist, dass dieser von einem sich quer dazu, also in Achsrichtung der Bremsscheibe erstreckenden Belaghaltebügel unter Vorspannung in den Belagschacht eines ortsfesten Bremsträgers oder des Bremssattels gedrückt wird. Dabei ist der Belaghaltebügel in zwei sich gegenüberliegenden, die Montageöffnung begrenzenden Bereichen des Bremssattels festgelegt.

Allerdings sind mit dem bislang notwendigen Einsatz des Belaghaltebügels einige funktionale sowie wirtschaftliche Nachteile verbunden. So ist natürlich die Herstellung des Belaghaltebügels als solche mit Kosten verbunden, die sich aus der Fertiwie auch aus der Materialbeschaffung ergeben. Auch die notwendige Bearbeitung des Bremssattels zur Festlegung des Belaghaltebügels schlägt sich kostensteigernd nieder, da unter anderem Sicherungs- bzw. Befestigungsmittel vorgesehen und eingebracht werden müssen, mit denen der Belaghaltebügel am Bremssattel befestigt wird.
Durch den Einsatz des Belaghaltebügels können im Betrieb Klappergeräusche entstehen, die aus einem Anschlagen der Bremsbeläge bei fahrbedingten Erschütterungen resultieren und die als äußerst störend wahrgenommen werden.
Im Fall eine Bremsung vollführen die Bremsbeläge eine quer zur Längserstreckung des Belaghaltebügels gerichtete Relativbewegung, durch die eine Oberflächenbeschichtung der Belaghaltefeder und/oder des Belaghaltebügels beschädigt werden kann, mit der Folge von Korrosionen, die auf Dauer gesehen die Betriebssicherheit der Scheibenbremse beeinträchtigen können.
In der DE 38 39 957 A1 ist eine Scheibenbremse geoffenbart, mit Bremsbelägen, an deren einem Reibbelag zugewandter Seite der Belagträgerplatte eine Belaghaltefeder befestigt ist, deren freie Schenkel sich an Stegen abstützen.

Aus der DE 26 03 549 A1 ist eine Schwimmsattel-Scheibenbremse bekannt, deren Bremsbeläge Belaghaltefedern aufweisen, die sich an Brückenteilen abstützen.
Der JP 51104285 U, der JP H 0428236 U sowie der FR 2354480 A1 ist jeweils ein Bremsbelag entnehmbar, der, entgegen der Gattung, keine integrierte Belaghaltefeder aufweist. Dessen Belaghaltefeder ist als separates Teil nach einem Einbau der Bremsbeläge in den Bremssattel zu montieren.
Der Erfindung liegt die Aufgabe zugrunde, eine Scheibenbremse der gattungsgemäßen Art so weiterzuentwickeln, dass sie kostengünstiger herstellbar ist und ihre Funktionssicherheit verbessert wird.

Diese Aufgabe wird durch eine Scheibenbremse mit den Merkmalen des Anspruchs 1 bzw. durch einen Bremsbelag mit den Merkmalen des Anspruchs 7 gelöst.

Durch diese konstruktive Ausbildung der Scheibenbremse ebenso wie des Bremsbelages kann nun vollständig auf einen Belaghaltebügel verzichtet werden.

Die Herstellungskosten der Scheibenbremse werden damit in einem durchaus bemerkenswerten Umfang reduziert, was insoweit bedeutungsvoll ist, als solche Scheibenbremsen als Serienteile in großen Stückzahlen hergestellt werden.

Dabei ergibt sich eine Reduzierung der Herstellungs- bzw. Fertigungskosten nicht nur aus dem eingesparten Material, sondern auch aus der nicht mehr erforderlichen Bearbeitung des Bremssattels hinsichtlich der Einbringung und Festlegung von Befestigungs- und Sicherungselementen. Da hierzu bislang eine mechanische Bearbeitung des Bremssattels erforderlich war, ergibt sich durch den nun möglichen Verzicht darauf ein wesentlicher Kostenvorteil.

In diesem Sinne ist auch die fehlende Möglichkeit eines betriebsbedingten Verschleißes der Belaghaltefeder im Berührungsbereich mit dem Belaghaltebügel zu sehen, woraus sich eine Verbesserung der Betriebssicherheit ergibt.

In funktionaler Hinsicht bringt die Erfindung insoweit Vorteile, als die erwähnten Klappergeräusche im Fahrbetrieb durch Gegeneinanderschlagen des Bremsbelages und des Belaghaltebügels nicht mehr auftreten können, was naturgemäß die Nutzungsbedingungen des Fahrzeuges verbessert.

Da die Halterung des Bremsbelages nun ausschließlich und direkt durch die Belaghaltefeder im Zusammenspiel mit dem Bremssattel erfolgt, kann durch eine entsprechende Formgebung der Belaghaltefeder ein progressiver Anstieg der Federkennlinie erreicht werden, wodurch sehr hohe Haltekräfte aufgenommen werden können.

Gemäß der Erfindung ist vorgesehen, dass sich die Belaghaltefedern der beiden Bremsbeläge sozusagen an der Unterseite des Bremssattels abstützen in Bereichen, die quer zur Umfangsrichtung der Bremsscheibe verlaufen und die die Montageöffnung des Bremssattels begrenzen. Diese Bereiche werden üblicherweise als Zugstreben bezeichnet, die den bei einer Schiebesattel-Scheibenbremse zuspannseitigen mit dem reaktionsseitigen Sattelrücken verbinden.

Die Kontur der Innenseite der Zugstreben ist so gestaltet, dass eine Steuerung der Federkraft, im Sinne einer Verringerung der Haltekraft möglich ist, die sich aus einer mit zunehmendem Verschleiß der Beläge einstellenden reduzierten Belagmasse ergibt. Das Restschleifmoment der Bremse kann dadurch deutlich herabgesetzt werden, was für den Betrieb der Scheibenbremse äußerst vorteilhaft ist.

Nach einem weiteren Gedanken der Erfindung ist vorgesehen, die Belaghaltefeder zweiteilig auszuführen, und zwar quer zur Längserstreckung. Hierdurch wird eine einfache Montage des Bremsbelages erreicht, bzw. ein Einsetzen der Belaghaltefeder bei bereits montiertem Bremsbelag.

Die beiden Hälften der Belaghaltefeder können durch eine Steckverbindung miteinander verbunden werden.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine erfindungsgemäße Scheibenbremse in einer schematisch perspektivischen Ansicht
- Figur 2: eine Vorderansicht auf die geschnittene Scheibenbremse
- Figur 3: einen Teil eines erfindungsgemäßen Bremsbelages in einer perspektivischen Darstellung.

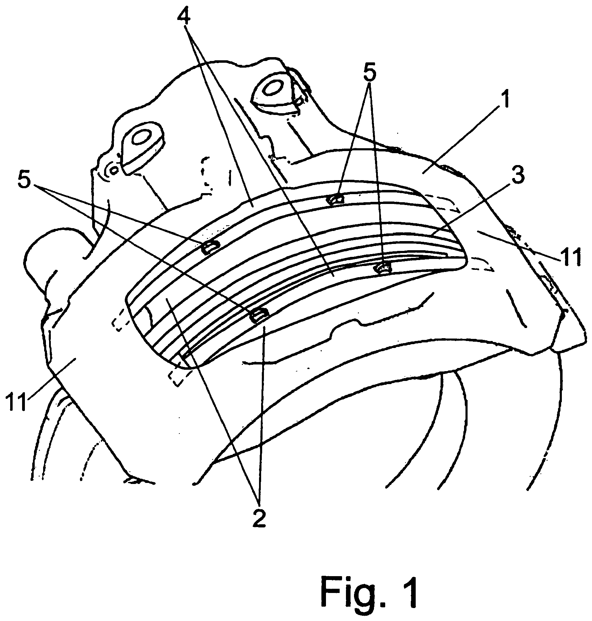

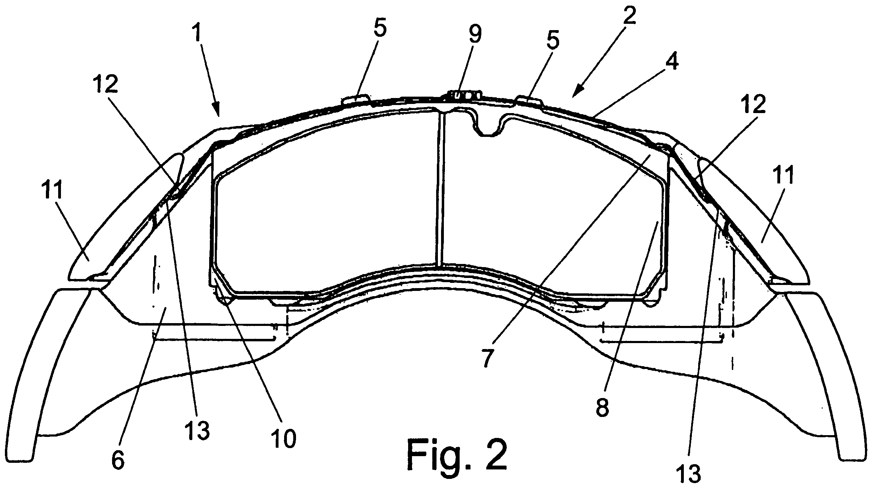

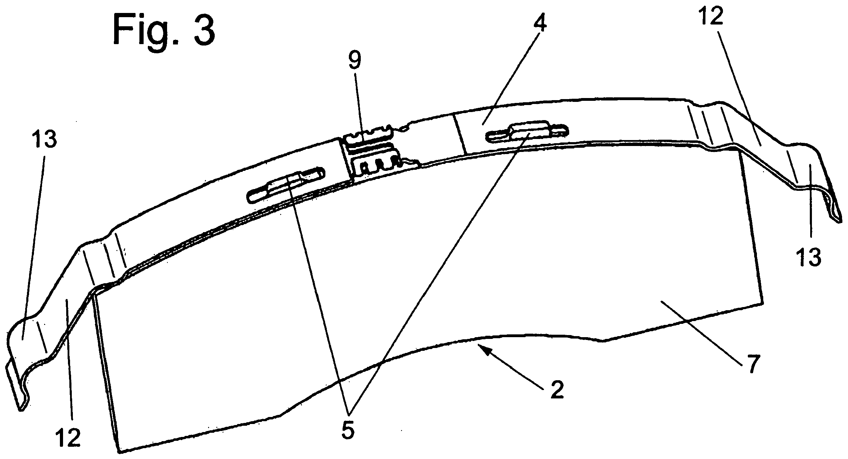

In der Figur 1 ist eine Scheibenbremse für ein Nutzfahrzeug dargestellt. Dabei sind beidseitig einer Bremsscheibe 3 zugeordnete Bremsbeläge 2 vorgesehen, von denen einer in den Figuren 2 und 3 erkennbar ist.

Jeder Bremsbelag ist mittels einer Belaghaltefeder 4 federbelastet in einem Belagschacht 10 eines ortsfesten Bremsträgers 6 gehalten.

Die als Blattfeder ausgebildete Belaghaltefeder 4 ist auf Laschen 5 aufgesteckt, die an eine Belagträgerplatte 7 des Bremsbelages 2 angeformt sind, die einen Reibbelag 8 trägt, der bei einer Bremsung reibend an der Bremsscheibe 3 anliegt.

Wie insbesondere die Figur 1 sehr deutlich zeigt, weist der Bremssattel 1 zwei etwa parallel und abständig zueinander angeordnete Zugstreben 11 auf, die einen zuspannseitigen Teil des Bremssattelrückens mit einem reaktionsseitigen Teil des Bremssattelrückens verbinden.

Jede Belaghaltefeder 4 erstreckt sich in Längsrichtung endseitig über den Bremsbelag 2 hinaus, unter Ausbildung von Schenkeln 12, die jeweils einen konvex geformten Stützbereich 13 aufweisen.

Wie insbesondere die Figur 2 sehr deutlich zeigt, liegen die Schenkel 12 mit ihrem jeweiligen Stützbereich 13 an der der Bremsscheibe 3 zugewandten Innenseite der Zugstreben 11 an, die im Sinne der Erfindung die Wand-Innenseite des Bremssattels 1 bilden.

Für eine einfache Montage der Belaghaltefeder 4 ist diese quer zur Längserstreckung geteilt, so dass sich zwei Hälften ergeben, die nach einer Montage, also nach einem Einführen der Bremsscheibe 2 und der Positionierung der Belaghaltefeder 4 durch ein Verbindungselement 9 fest miteinander verbunden werden, so dass die beiden Hälften der Belaghaltefeder 4 in Verbindung mit den Laschen 5 weitgehend unverrückbar am Bremsbelag 2 gehalten sind.

Statt als Blattfeder, wie im gezeigten Ausführungsbeispiel, kann die Belaghaltefeder 4 selbstverständlich auch im Querschnitt davon abweichend geformt sein, beispielsweise als Kreis oder Polygon, also aus einem Federdraht bestehen, je nach Erfordernis.

### Bezugszeichenliste

- 1: Bremssattel
- 2: Bremsbelag
- 3: Bremsscheibe
- 4: Belaghaltefeder
- 5: Lasche
- 6: Bremsträger
- 7: Belagträgerplatte
- 8: Reibbelag
- 9: Verbindungselement
- 10: Belagschacht
- 11: Zugstrebe
- 12: Schenkel
- 13: Stützbereich

## Patentansprüche

1. Scheibenbremse für ein Nutzfahrzeug, mit beidseitig einer Bremsscheibe (3) angeordneten Bremsbelägen (2), die jeweils mittels einer angeschlossenen Belaghaltefeder (4) federbelastet in einem Belagschacht (10) eines ortsfesten Bremsträgers (6) oder eines Bremssattels (1) gehalten sind, wobei sich jede Belaghaltefeder (4) endseitig an einer der Bremsscheibe (3) zugewandten Wand-Innenseite des Bremssattels (1) abstützt, wobei jede Wand-Innenseite, an der sich die jeweilige Belaghaltefeder (4) abstützt, durch die den Bremsbelägen (2) zugewandte Innenseite einer sich quer zur Längsrichtung des Bremsbelages (2) erstreckenden Zugstrebe (11) gebildet ist, die einen zuspannseitigen mit einem reaktionsseitigen Rückenteil des Bremssattels (1) verbindet und eine Montageöffnung des Bremssattels (1) seitlich begrenzt,
**dadurch gekennzeichnet, dass** die Innenseite jeder Zugstrebe (11) derart geformt ist, dass die Andruckkraft der Belaghaltefeder (4) entsprechend einer durch Bremsenverschleiß bedingten reduzierten Belagmasse verringert wird.

2. Scheibenbremse nach Anspruch 1, **dadurch gekennzeichnet, dass** die Belaghaltefeder (4) den Bremsbelag in Längserstreckung beidseitig überragt, unter Ausbildung jeweils eines Schenkels (12), der an der Wand-Innenseite des Bremssattels (1) zumindest bereichsweise anliegt.

3. Scheibenbremse nach Anspruch 2, **dadurch gekennzeichnet, dass** jeder Schenkel (12) einen zur Wand-Innenseite des Bremssattels (1) gerichteten konvexen Stützbereich (13) aufweist, der an der Wand-Innenseite des Bremssattels (1) anliegt.

4. Scheibenbremse nach einem der vorhergehenden Ansprüche, **dadurch gekennzeichnet, dass** die Belaghaltefeder (4) aus zwei Teilen besteht, die quer zur Längserstreckung des Bremsbelages (2) getrennt sind und nach einer Montage des Bremsbelages miteinander verbunden sind.

5. Scheibenbremse nach Anspruch 4, **dadurch gekennzeichnet, dass** die Verbindung über ein Verbindungselement (9) erfolgt.

6. Scheibenbremse nach einem der Ansprüche 4 oder 5 **dadurch gekennzeichnet, dass** die beiden Teile der Belaghaltefeder (4) fest miteinander verbunden sind.

7. Bremsbelag einer Scheibenbremse, mit einer Belagträgerplatte (7) und einem darauf befestigten Reibbelag (8) sowie einer an einer Längskante der Belagträgerplatte (7) angeschlossenen, auf daran angeformten Laschen (5) aufgesteckten Belaghaltefeder (4), wobei die Belaghaltefeder (4) den Bremsbelag im übrigen in Längsrichtung gesehen beidseitig, unter Bildung jeweils eines Schenkels (12) überragt, **dadurch gekennzeichnet, dass**
die Belaghaltefeder (4) aus zwei Teilen besteht, die quer zur Längserstreckung der Belagträgerplatte (7) getrennt sind.

8. Bremsbelag nach Anspruch 7, **dadurch gekennzeichnet, dass** jeder Schenkel (12) einen entgegengesetzt zur Belagträgerplatte (7) ausgerichteten konvex geformten Stützbereich (13) aufweist.

9. Bremsbelag nach einem der Ansprüche 7-8, **dadurch gekennzeichnet, dass** die beiden Teile der Belaghaltefeder (4) nach einer Montage des Bremsbelages (2) fest miteinander verbunden sind.

10. Bremsbelag nach einem der Ansprüche 7-9, **dadurch gekennzeichnet, dass** die beiden Teile der Belaghaltefeder (4) durch ein Verbindungselement (9) miteinander verbunden sind.

11. Bremsbelag nach einem der Ansprüche 7-10, **dadurch gekennzeichnet, dass** die Belaghaltefeder (4) als Blattfeder ausgebildet ist.

12. Bremsbelag nach einem der Ansprüche 7 - 10, **dadurch gekennzeichnet, dass** die Belaghaltefeder (4) einen runden oder unrunden Querschnitt aufweist und aus einem Federdraht besteht.

## Claims

1. A disc brake for a utility vehicle comprising brake linings (2) which are arranged on either side of a brake disc (3) and held spring loaded in a lining groove (10) of a fixed brake carrier (6) or brake calliper (1) by means of an associated lining retaining spring (4), the ends of each lining retaining spring (4) being supported on an interior wall of the brake calliper (1) facing the brake disc (3), each interior wall on which a lining retaining spring (4) rests taking the form of the inner face of the tension strut (11) which extends facing the brake lining at an angle to the longitudinal direction of the brake lining (2), connects an application-side rear part of the brake calliper (1) to a reaction-side rear part of the brake calliper (1) and laterally delimits an assembly opening of the brake calliper (1), **characterised in that** the inner face of each tension strut (11) is formed such that the contact pressure force of the lining retaining spring (4) decreases as the brake lining mass reduces due to brake wear.

2. A disc brake according to claim 1, **characterised in that** the lining retaining spring (4) projects longitudinally beyond the braking lining on either side to form a leg (12) which lies against at least certain regions of the interior wall of the brake calliper (1).

3. A disc brake according to claim 2, **characterised in that** each leg (12) has a convex support area (13) which is oriented towards the interior wall of the brake calliper (1) and lies adjacent to the interior wall of the brake calliper (1).

4. A disc brake according to one of the preceding claims, **characterised in that** the lining retaining spring (4) consists of two parts which are separated at an angle to the longitudinal direction of the brake lining (2) and connected to one another once the brake lining has been fitted.

5. A disc brake according to claim 4, **characterised in that** the connection is made by a connection element (9).

6. A disc brake according to one of claims 4 or 5, **characterised in that** the two parts of the lining retaining spring (4) are permanently connected to one another.

7. A brake lining of a disc brake comprising a lining carrier plate (7), on which is fixed a friction lining (8), and a lining retaining spring (4) which is connected to a longitudinal edge of the lining carrier plate (7) and attached to lugs formed on said lining retaining spring (4), the lining retaining spring (4) projecting beyond the brake lining on either side when viewed in the longitudinal direction to form a leg (12), **characterised in that** the lining retaining spring (4) consists of two parts that are separated at an angle to the longitudinal extension of the lining carrier plate (7).

8. A brake lining according to claim 7, **characterised in that** each leg (12) has a convex-shaped supporting region (13) oriented in the opposite direction to the lining carrier plate (7).

9. A brake lining according to one of claims 7 to 8, **characterised in that** the two parts of the lining retaining spring (4) are connected permanently to one another once the brake lining has been fitted.

10. A brake lining according to one of claims 7 to 9, **characterised in that the** two parts of the lining retaining spring (4) are connected to one another by a connecting element (9).

11. A brake lining according to one of claims 7 to 10, **characterised in that** the lining retaining spring (4) is designed as a leaf spring.

12. A brake lining according to one of claims 7 to 10, **characterised in that** the lining retaining spring (4) has a circular or non-circular cross-section and consists of a spring wire.

## Revendications

1. Frein à disque pour un véhicule utilitaire, comprenant des garnitures (2) de frein, qui sont disposées des deux côtés d'un disque (3) de frein et qui, soumises à l'action d'un ressort (4) rattaché de retenue de la garniture, sont retenues dans un puits (10) de garniture d'un support (6) de frein ou d'un étrier (1) de frein à emplacement fixe, chaque ressort (4) de retenue de la garniture s'appuyant du côté de l'extrémité sur un côté intérieur de paroi, tourné vers le disque (3) de frein, de l'étrier (1) de frein, dans lequel chaque côté intérieur de paroi, sur lequel le ressort (4) de retenue de la garniture s'appuie, est formé par le côté intérieur, tourné vers les garnitures (2) de frein, d'un tirant (11), qui s'étend transversalement à la direction longitudinale de la garniture (2) de frein, qui relie une partie du côté du serrage à une partie arrière du côté de la réaction de l'étrier (1) de frein et qui délimite latéralement une ouverture de montage de l'étrier (1) de frein,
**caractérisé**
**en ce que** le côté intérieur de chaque tirant (11) est conformé de manière à ce que la force de pression du ressort (4) de retenue de la garniture soit diminuée en fonction d'une réduction de la masse de la garniture provoquée par une usure du frein.

2. Frein à disque suivant la revendication 1, **caractérisé en ce que** le ressort (4) de retenue de la garniture dépasse des deux côtés dans l'étendue longitudinale de la garniture de frein, en formant respectivement une branche (12), qui s'applique, au moins par endroit, du côté intérieur de paroi de l'étrier (1) de frein.

3. Frein à disque suivant la revendication 2, **caractérisé en ce que** chaque branche (12) a une partie (13) d'appui convexe, qui est dirigée vers le côté intérieur de paroi de l'étrier (1) de frein et qui s'applique au côté intérieur de paroi de l'étrier (1) de frein.

4. Frein à disque suivant l'une des revendications précédentes, **caractérisé en ce que** le ressort (4) de retenue de la garniture est constitué de deux parties, qui sont séparées transversalement à l'étendue longitudinale de la garniture (2) de frein et qui sont reliées l'une à l'autre après un montage de la garniture de frein.

5. Frein à disque suivant la revendication 4, **caractérisé en ce que** la liaison s'effectue par un élément (9) de liaison.

6. Frein à disque suivant l'une des revendications 4 ou 5,
**caractérisé en ce que** les deux parties du ressort (4) de retenue de la garniture sont reliées fixement entre elles.

7. Garniture d'un frein à disque, comprenant une plaque (7) formant porte-garniture et une garniture (8) de friction, qui y est fixée, ainsi qu'un ressort (4) de retenue de la garniture rattaché à un bord longitudinal de la plaque (7) formant porte-garniture et fixé sur des ergots (5) qui y sont formés, le ressort (4) de retenue de la garniture dépassant, en outre, de la garniture de frein considéré dans la direction longitudinale, des deux côtés en formant respectivement une branche (12),
**caractérisée en ce que** le ressort (4) de retenue de la garniture est constitué de deux parties, qui sont séparées transversalement à l'étendue longitudinale de la plaque (7) formant porte-garniture.

8. Garniture suivant la revendication 7, **caractérisée en ce que** chaque branche (12) a une partie (13) d'appui convexe dirigée dans le sens contraire à celui allant vers la plaque (7) formant porte-garniture.

9. Garniture suivant l'une des revendications 7 à 8,
**caractérisée en ce que** les deux parties du ressort (4) de retenue de la garniture sont reliées fixement entre elles après un montage de la garniture (2) de frein.

10. Garniture suivant l'une des revendications 7 à 9,
**caractérisée en ce que** les deux parties du ressort (4) de retenue de la garniture sont reliées entre elles par un élément (9) de liaison.

11. Garniture suivant l'une des revendications 7 à 10,
**caractérisée en ce que** le ressort (4) de retenue de la garniture est constitué sous la forme d'un ressort à lame.

12. Garniture suivant l'une des revendications 7 à 10,
**caractérisée en ce que** le ressort (4) de retenue de la garniture a une section transversale circulaire ou non circulaire et est constitué d'un fil formant ressort.
